Europäisches Patentamt

(19) European Patent Office

Office européen des brevets

(11) Publication number : **0 163 370**
**B1**

(12) **EUROPEAN PATENT SPECIFICATION**

(45) Date of publication of patent specification :
08.07.87

(21) Application number : 85301622.8

(22) Date of filing : 08.03.85

(51) Int. Cl.⁴ : **F 15 B 15/10**, B 25 J 9/14,
B 29 C 67/00

(54) **Actuator.**

(30) Priority : 25.04.84 JP 83432/84

(43) Date of publication of application :
04.12.85 Bulletin 85/49

(45) Publication of the grant of the patent :
08.07.87 Bulletin 87/28

(84) Designated contracting states :
DE FR GB SE

(56) References cited :
DE-B- 1 056 815
GB-A-  957 929
US-A- 2 789 580

(73) Proprietor : **Bridgestone Corporation**
**10-1, Kyobashi 1-Chome Chuo-Ku**
**Tokyo 104 (JP)**

(72) Inventor : **Sakaguchi, Yuji**
**2800-1, Ogawahigashi-Cho**
**Kodaira City Tokyo (JP)**
Inventor : **Takagi, Takeo**
**2800-1, Ogawahigashi-Cho**
**Kodaira City Tokyo (JP)**
Inventor : **Imamura, Yoshinori**
**2800-1, Ogawahigashi-Cho**
**Kodaira City Tokyo (JP)**

(74) Representative : **Whalley, Kevin et al**
**MARKS & CLERK 57/60 Lincoln's Inn Fields**
**London WC2A 3LS (GB)**

## Description

This invention relates to an actuator, operable by fluid pressure, particularly suitable for actuating means for pneumatically driven robots or manipulators.

The present inventors have investigated and developed such actuators operated in response to inner pressure to operate, for example, arms and handles of robots. Such an actuator includes a thin-walled inner cylinder made of an elastomer such as rubber or the like and an extensible and contractible braided structure covering and reinforcing the inner cylinder (US-A-27 89 580, Fig. 2). When the inner cylinder is supplied with pneumatic pressure, the inner cylinder expands to increase its diameter and simultaneously shortens its axial length to provide a suitable contracting force for arms or hands. In such an expanding operation of the inner cylinder, the braided structure is also expanded to increase its braided angles to what is called « angles of repose ». Such a movement of the braided structure to change its braided angles is referred to herein as « pantograph movement », because the movement of rhombus patterns of elements forming the braided structure is like the movement of a pantograph.

When fluid pressure is applied in a thin-walled inner cylinder having an inner diameter $r_1$ and an outer diameter $r_2$, a circumferential stress $\sigma_t$ is indicated by the following equation.

$$\sigma_t = \frac{p_1 \, r_1^2}{r_2^2 - r_1^2} \left( \frac{r_2^2}{r^2} + 1 \right)$$

where $p_1$ is internal pressure. The maximum and minimum stresses $\sigma_{max}$ and $\sigma_{min}$ occur at $r = r_1$ and $r = r_2$ and are indicated as follows.

$$\sigma_{max} = \frac{p_1 \, r_1^2}{r_2^2 - r_1^2} \left( \frac{r_2^2}{r_1^2} + 1 \right)$$

$$\sigma_{min} = \frac{2 \, p_1 \, r_1^2}{r_2^2 - r_1^2}$$

In the case of a typical thin-walled inner cylinder having an inner diameter of 4 mm and an outer diameter of 5 mm, the ratio of the maximum to minimum stress is as much as 1.28 or $\sigma_{max}/\sigma_{min} = 1.28$. It is understood that every time the internal pressure is applied into the cylinder, its inner surface is repeatedly subjected to the maximum stresses, resulting in fatigue failure of the cylinder so as to shorten its service life. It has therefore been desired for many years to obtain actuators which are rugged and durable in use.

The present invention aims to provide an improved actuator highly durable in use for a very long period of time by a particular constitution of its inner cylinder, in order to avoid fatigue due to the inherent construction of the actuator.

The present invention provides an actuator comprising a thin-walled inner cylinder made of rubber or rubber-like elastic material, and an extensible and contractible reinforcing braided structure surrounding the inner cylinder, the actuator being contractible in its axial direction to obtain contractive force when pressurized fluid is supplied into the inner cylinder to expand it in its radial direction, while changing the braided angles of the braided structure, characterized in that the inner cylinder has an initial compressive stress in its inner portion caused by reversing the inner cylinder its inside for its outside after forming and vulcanizing thereof.

The invention will be further described, by way of example only, with reference to the accompanying drawings, in which

Figures 1a, 1b, and 1c are perspective views illustrating steps for introducing initial compressive stresses into an inner cylinder of an actuator according to the invention ;

Figure 2 is a schematic illustration of distribution of initial circumferential stresses in an inner cylinder of an actuator according to the invention ; and

Figure 3 is a front elevation, partially in section, of an actuator according to the invention.

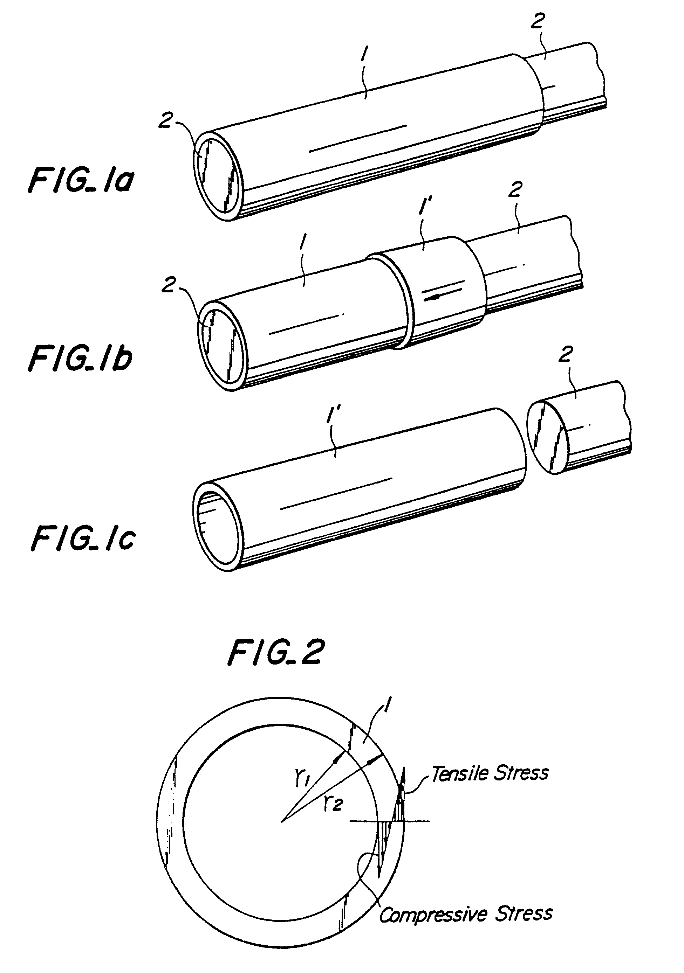

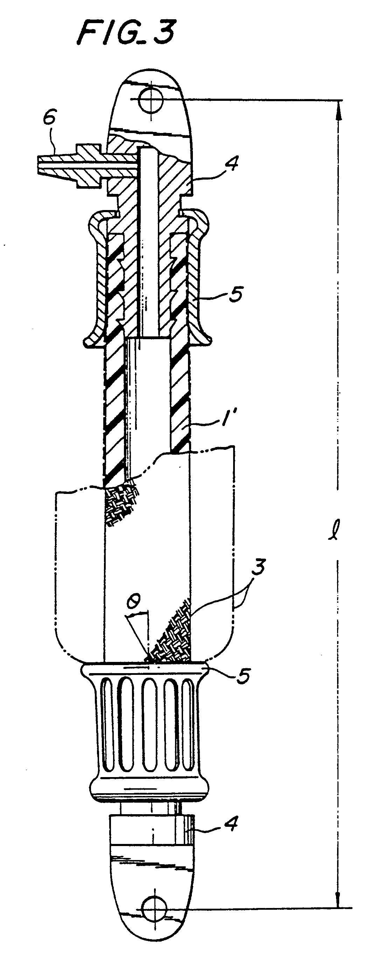

Figure 1a illustrates a thin-walled inner cylinder 1 immediately after it is formed and vulcanized and a mandrel 2 preferably made of silicone rubber. The thus formed and vulcanized inner cylinder 1 is removed from the mandrel 2 in the direction of the arrow in Fig. 1b, while the inside of the cylinder 1 is being turned outside as shown in Fig. 1b. In this manner, the inner cylinder 1' shown in Fig. 1c has been reversed its inner surface for its outer surface. As a result, the inner cylinder 1' is under a particular stressed condition in which compressive stresses acting upon the inner portion of the cylinder balance with tensile stresses on the outer portion of the cylinder as shown schematically in Fig. 2 illustrating a distribution of circumferential stresses.

In this case, the maximum circumferential compressive stress $\sigma$ is approximately indicated as follows.

$$\sigma = E \frac{r_1 - r_2}{r_2}$$

where $E$ is the modulus of elasticity of the material of the inner cylinder, $r_1$ is the cylinder inner diameter and $r_2$ is the cylinder outer diameter.

In the case of an inner cylinder having inner and outer diameters of 4 and 5 mm, the maximum circumferential compressive stress is $\sigma = E \times 0.2$. Although the right side of this equation is actually minus, the minus sign is neglected because the stress is compressive.

If the modulus of elasticity $E$ of the material is 10 kgf/cm², this initial compressive stress is approximately 2 kgf/cm².

As above described, the maximum circumferential tensile stress $\sigma_{max}$ is

$$\sigma_{max} = \frac{p_1 \, r_1^2}{r_2^2 - r_1^2} \left( \frac{r_2^2}{r_1^2} + 1 \right)$$

at the inside of the cylinder, where $p_1$ is the internal or operating pressure. The operating pressure is usually less than 4 kgf/cm². When an operating pressure of 4 kgf/cm² and inner and outer diameters of 4 and 5 mm are substituted in the above equation, the maximum tensile stress on the inside of the cylinder subjected to the maximum operating pressure of 4 kgf/cm² is about 18 kgf/cm². However, there is the initial compressive stress 2 kgf/cm² at the inside of the cylinder, so that the maximum tensile stress is reduced to 16 kgf/cm². In other words, it is evident that the maximum tensile stress is reduced by more than 11 %.

Fig. 3 illustrates an actuator according to the invention comprising a thin-walled inner cylinder 1'. The actuator shown in Fig. 3 further comprises a reinforcing braided structure 3 extensibly and contractibly covering the inner cylinder 1', nipples 4 tightly fitted in both ends of the inner cylinder 1, clamp sleeves 5 restraining the braided structure 3 to the inner cylinder 1, and a fitting 6 for applying the operating pressure p into the inner cylinder 1'.

When an operating pressure p is applied into the inner cylinder 1' through the fitting 6, the inner cylinder 1' is expanded and the braided structure is simultaneously expanded from the position shown by solid lines to that shown by phantom lines in Fig. 3 to enlarge the initial braided angles θ to approximately 54° 44' of what is called « angle of repose » in the pantograph movement of the braided structure 2 so as to shorten the distance ρ between the nipples 4.

Tensile forces caused by the shortening of the nipples 4 of the actuator are of course applicable to operations of robots and manipulators.

In the above embodiment, the initial compressive stresses have been introduced in the inner portion of the thin-walled inner cylinder by the reversing of the cylinder so that its inside becomes its outside after forming and vulcanizing the inner cylinder.

As can be seen from the above description, according to the invention initial compressive stresses are caused in the inner portion of a thin-walled inner cylinder of an actuator so as to partially reduce circumferential stresses in the cylinder on applying inner pressure into the inner cylinder to mitigate the fatigue of the inner cylinder due to repeated circumferential stresses, thereby greatly improving the durability of the actuator.

### Claim

An actuator comprising a thin-walled inner cylinder (1') made of rubber or rubber-like elastic material, an extensible and contractible reinforcing braided structure (3) surrounding the said inner cylinder, the said actuator being contractible in its axial direction to obtain contractive force when pressurized fluid is supplied into the inner cylinder (1') to expand it in its radial direction, while changing the braided angles of the braided structure (3), characterized in that the inner cylinder (1') has an initial compressive stress in its inner portion caused by reversing the inner cylinder its inside for its outside after forming and vulcanizing thereof.

### Patentanspruch

Betätigungseinrichtung mit einem aus Gummi oder gummiartigem elastischem Werkstoff hergestellten dünnwandigen inneren Zylinder (1'), der von einem dehn- und zusammenziehbaren Geflecht (3) umgeben ist, so daß die Betätigungseinrichtung in ihrer axialen Richtung zusammenziehbar ist, um eine Kontraktionskraft zu erzeugen, wenn ein Fluid unter Druck in den inneren Zylinder (1') eingeleitet wird und ihn in radialer Richtung weitet, wobei sich die Kreuzungswinkel des Geflechts (3) verändern, dadurch gekennzeichnet daß der innere Zylinder (1') in seinem inneren Bereich unter einer Druckvorspannung

3

**0 163 370**

steht, die dadurch verursacht ist, daß die Innenseite des inneren Zylinders nach dessen Formung und Vulkanisierung nach außen gekehrt worden ist.

**Revendication**

Actionneur comportant un cylindre intérieur à paroi mince (1'), constitué par du caoutchouc ou un matériau élastique analogue au caoutchouc, une structure tressée de renforcement (3) qui peut être dilatée et contractée et qui entoure ledit cylindre intérieur, ledit actionneur pouvant être contracté dans sa direction axiale grâce à l'obtention d'une force de contraction lorsqu'un fluide sous pression est envoyé à l'intérieur du cylindre intérieur (1') de manière à dilater ce dernier dans sa direction radiale, moyennant une modification des angles de tressage de la structure tressée (3), caractérisé en ce qu'une contrainte initiale de compression, produite par retournement du cylindre intérieur (1'), amenant sa face intérieure à l'extérieur, après formation et vulcanisation dudit cylindre intérieur, est présente dans la partie intérieure de ce dernier.

4

*FIG.1a*

2

1

2

*FIG.1b*

1

1'

2

2

*FIG.1c*

1'

2

*FIG.2*

1

$r_1$

$r_2$

Tensile Stress

Compressive Stress

# FIG.3